Europäisches Patentamt

(19) European Patent Office (11) Publication number: **0 085 610**

Office européen des brevets **B1**

(12) **EUROPEAN PATENT SPECIFICATION**

(45) Date of publication of patent specification: **06.08.86** (51) Int. Cl.⁴: **B 01 J 8/44**

(21) Application number: **83400174.5**

(22) Date of filing: **26.01.83**

(54) **Gas distributor for fluidized beds.**

(30) Priority: **29.01.82 IT 1934882**

(43) Date of publication of application:
**10.08.83 Bulletin 83/32**

(45) Publication of the grant of the patent:
**06.08.86 Bulletin 86/32**

(84) Designated Contracting States:
**AT BE DE FR GB NL SE**

(56) References cited:
**FR-A-1 360 146**
**FR-E- 82 698**
**US-A-4 308 806**

**JAPANESE PATENTS REPORT, vol. 81, no. 12,**
**Section: Chemical Engineering, J8-J, page 3,**
**Derwent Publications Ltd., London (GB);**

(73) Proprietor: **Montedison S.p.A.**
**31, Foro Buonaparte**
**I-20121 Milan (IT)**

(72) Inventor: **Saggese, Giuseppe**
**16 Via Cuneo**
**Novara (IT)**
Inventor: **Cortesi, Paolo**
**47 Via Capuccini**
**Chivasso (Torino) (IT)**
Inventor: **Govoni, Gabriele**
**63 Via Pilastro**
**Renazzo (Ferrara) (IT)**
Inventor: **Bigiavi, Daniele**
**2 Via G. Rocchi**
**Bologna (IT)**

(74) Representative: **Hirsch, Marc-Roger**
**34 rue de Bassano**
**F-75008 Paris (FR)**

## Description

The present invention concerns a gas distributor for fluid bed reactors. More particularly, the present invention relates to such a gas distributor consisting of an inverted cone comprising an inner part and an outer part, said cone having a conicity comprised between 50° and 120°, and provided on its lateral walls with passages for the adduction of gas, disposed symmetrically with respect to the axis of the cone.

For many years the importance for such gas distributors to ensure a smooth and correct operation of the fluid bed apparatus has been known to the man skilled in the art.

In fact, the occurrence of the fluidization, the uniform distribution of the gas in the bed, with the absence of blind zones, the frequency and dimensions of the bubbles in the fluidized bed, with appreciable influences on the mixing of the solids and on the exchanges of material and heat inside the system fundamentally depends on the characteristics of the gas distributing system.

For most of the applications, it is necessary that the gas distributor ensures a uniform distribution of the gas, that it hinders the fall by gravity of the solid during the operation of the gas distribution as well as during the interruption of the reactor operation.

Furthermore, said distributor has to be shaped in such a way as to reduce to a minimum the pressure loss and the damage caused by erosion. Many types of distributors ensure the above-mentioned performances, and they substantially consist of a plate with a plurality of small holes which allow passage of the gas but not of the small particles forming the fluidized bed.

FR—A—1 360 146 describes a gas distributor comprising an inverted cone formed of an inner part and an outer part and the conicity of which is comprised between 50 and 120°, said cone being provided on its lateral walls with passages for the adduction of gas disposed symmetrically with respect to the axis of the cone area.

In US—A—4 308 806 are also known such distributors in which the apex of the cone is provided with discharge means for the fluidized material.

The present invention therefore provides a new device for the distribution of gas and vapors in fluidized beds of solid particles which, besides the previously mentioned characteristics, also presents the characteristic of being perfectly crossable by the solids (i.e. allowing the passage of the solids) dragged along by the recycled gases or vapors returned to the bed.

In the distributor according to the invention, holes for the inflow of the gases show an inclination with respect to the horizontal line comprised between 2° and 50°, but preferably comprised between 10° and 15°, and between the inner cone 1 and the outer cone 2 along their peripheral contact line are formed slots 5 for the inflow of the recycled gas. In fact, the inner part 1 hereinafter referred to as "inner cone" has the shape of an inverted cone, and is intended to support the bed of solid material during the interruption of operation, to distribute the gas uniformly inside the bed and to allow the particles carried along by the recycling gas to be returned into the bed. The outer part 2 of the distributing device, hereinafter called the external cone which may, however, also display any other geometrical shape, ensures perfect and homogeneous feeding of the gas and of the particles at the orifices or holes arranged on the upper part of the internal cone in contact with the bed.

The inner part 1 of the device, or "inner cone" which may, however, have a generally pyramidal shape with a more or less faceted surface, shows a conicity comprised between 50° and 120°.

In this inner cone are provided on the lower part at least two holes 3, but preferably 3 to 24 holes, in a symmetrical axial arrangement.

The length of the hole 3 must be greater than the diameter of the hole itself in order to cause the gases to flow in a pre-determined direction. Said direction forms, with respect to the horizontal line, an angle comprised between 2° and 50°, but preferably comprised between 10° and 15°.

Nozzles can be inserted into the feeding holes, for the specific purpose of causing the gas to flow in a precise direction: these nozzles are particularly useful when the thickness of the cone walls is small in comparison to the diameter of the holes themselves.

This inner cone 1 presents at its lower end an outlet which allows discharging from the bed the product and the substances harmful to the smooth operation of the apparatus.

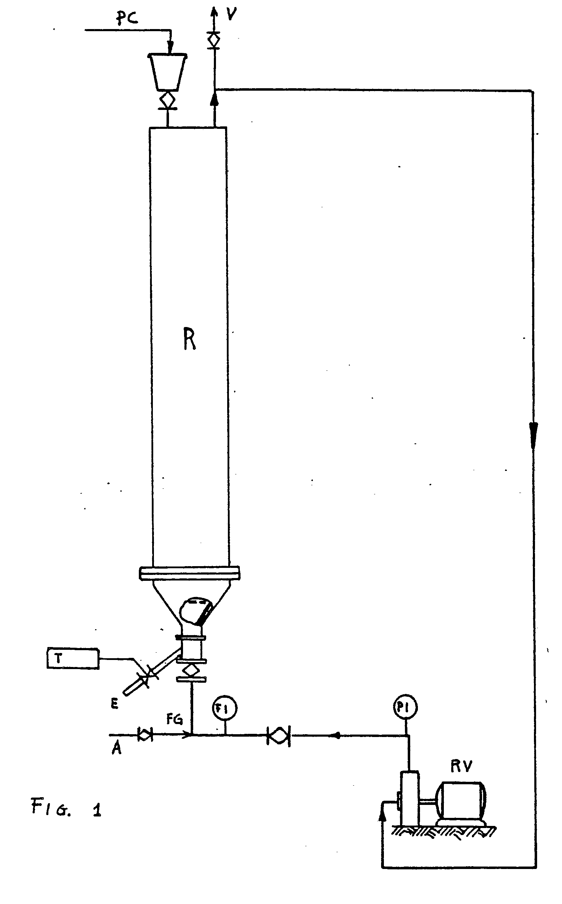

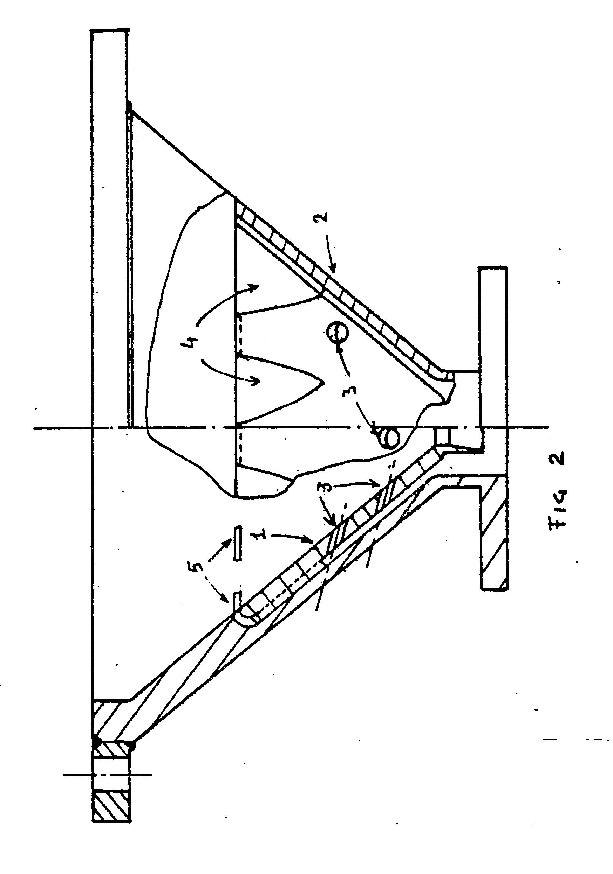

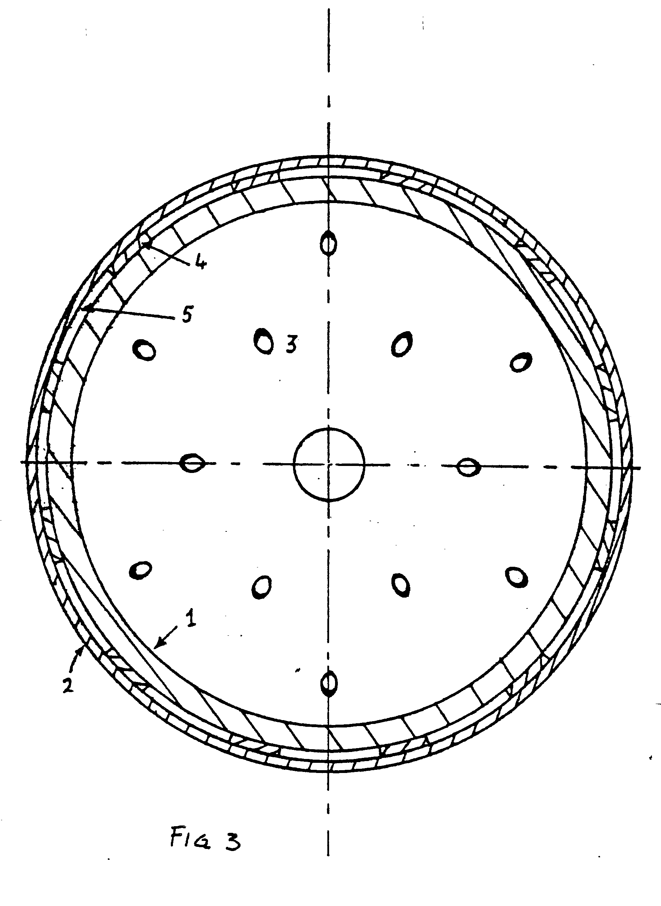

At least two spacers 4 (fig 2) allow the supporting of the inner cone 1 inside the external or outer cone 2 and, at the same time, the forming of a crown of slots or orifices 5 (figures 2, 3 and 4) along the peripheral contact line between the two cones 1 and 2.

These slots or orifices 5 ensure the re-introduction into the bed of the solid that could not pass through the holes 3, as well as the cleaning of the reactor. The width of these orifices 5 is dimensioned, with regard to the granulometry of the product and the flowability characteristics of the particles, in such a way as to allow the passage of the particles conveyed by the carrying gas, while at the same time to hinder the fall by gravity of the fluid bed during interruption of the fluidization process.

The operation of said device, will be better understood by reference to the attached drawings. The fluidized-bed reactor R of figure 1 at the base of which is disposed the gas distributor according to the invention, is loaded through a loading inlet PC with solid up to a certain desired height. Thereupon the fluidizing gas FG is fed into the mouth of the external cone 2 of the gas distributor and, is conveyed to the various holes 3 and to the slots 5 of the internal cone 1 in order to diffuse.

From said cone the gas is uniformly distributed throughout the bed, bringing this latter into a fluidized condition. The whole gas flow fed in, or part of it, with or without fresh feed A, together with the particles removed from the fluid bed, is recycled by means of a fan *RV*. During the fluidization, the solid may be discharged continuously from the fluid bed through the discharge *E* on which is mounted a valve fitted with a timer *T*.

Figures 2, 3 and 4 represent structures that are typical for the device according to this invention.

Amongst the advantages derived from the application of this type of distributor to the fluidized-bed apparatuses must be listed, when said distributor is operated in a closed circuit, the following advantages:

it allows to eliminate cylones and filters that previously had to be used on said apparatuses, leading to considerable financial economy both in the realization stage of the installation as well as in the operational stage;

it allows to reduce to a minimum the losses of solid product and to maintain the fluidized material in a homogeneous state, thereby avoiding the grading of the bed itself;

it extends the use of the fluidized beds to new processes, by overcoming the drawbacks for these processes to use the presence of filters, such as, for instance, the gaseous phase polymerization.

Furthermore:

it allows the presence of a device 6 for the discharge of the fluidized material consisting of a discharge tube positioned in the lowest part of the fluidized bed and showing a pronounced conicity: this facilitates the discharging of the product as well as of the possible build-up of solids that may form in the reactor;

it induces in the bed a fluidodynamic condition that also makes the bed suitable for the fluidization of particles of a few millimeters.

### Example

In order to illustrate the operational characteristics of the distributor according to this invention a series of operations was carried out on a fluidization column of 292 mm diameter.

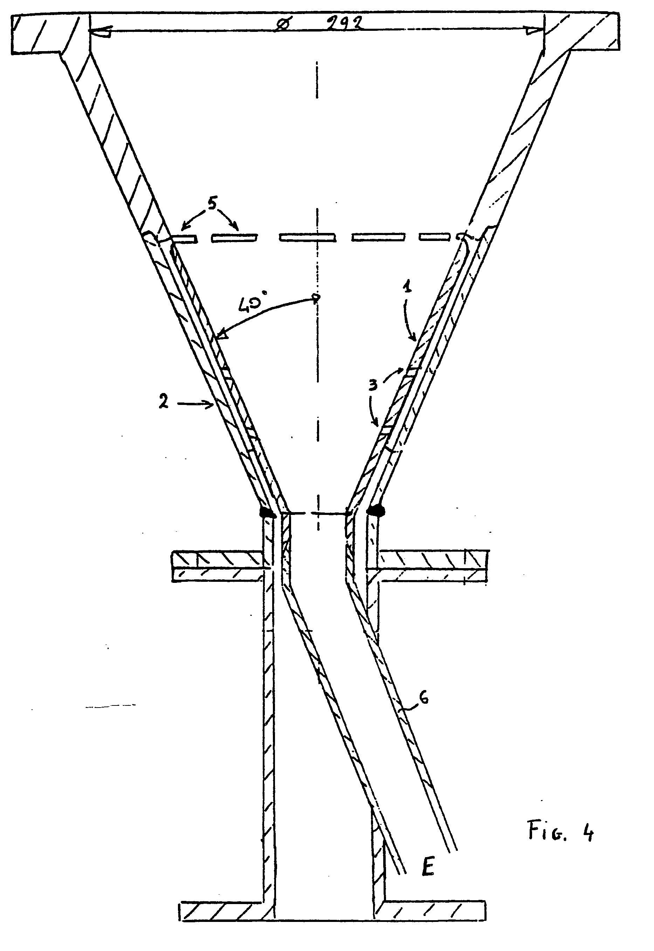

The distributor used was of the type represented on figure 4, and had 12 holes and 12 slots. It was operated at atmospheric pressure and at room temperature, using nitrogen as the fluidizing gas.

The material to be fluidized consisted respectively of polypropylene particles with a mean Sauter diameter of 216 microns, ethylenepropylene copolymer particles with a mean diameter of 271 microns and polypropylene particles of a spherical form with a mean diameter of 1168 microns.

The fluidization tests, carried out with a height/ diameter ratio of the bed equal respectively to 2, 3 and 4, and with a superficial velocity (ratio between flow rate of the gas and the cross-section area of the column) of the fluidizing gas of up to 50 cm/sec., render apparent that the distributor shows the following advantages:

it allows to achieve a regular fluidization of the bed with a fast circulation of the particles (velocity of said particles at the wall of more than 15 cm/sec., at the higher gas velocities);

it allows to operate with an efficiency of distribution, defined as the ratio between the loss of pressure found in the bed and the theoretical loss (weight of solid on the pressure intake/cross section of column), in general greater than 0.9, but in many cases attaining values equal to unity;

it is perfectly crossable by the powder carried (i.e. allows the passage of this powder) along by the recycling gas;

it hinders the passage of the solids into the lower cone (external cone 2) and into the fluidization gas feed pipeline leading to the bed, also during interruption of operation;

it allows trouble-free discharge of the solid of the bed in a continuous way.

### Claim

Gas distributor for fluid bed reactors, consisting of an inverted cone comprising an inner part 1 and an outer part 2, said cone having a conicity comprised between 50° and 120°, and provided on its lateral walls with passages 3 for the adduction of gas, disposed symmetrically with respect to the axis of the cone, said gas distributor being characterized in that the holes 3 for the inflow of the gases show an inclination with respect to the horizontal line comprised between 2° and 50°, but preferably comprised between 10° and 15°, and in that between the inner cone 1 and the outer cone 2 along their peripheral contact line are formed slots 5 for the inflow of the recycled gas.

### Patentanspruch

Gasverteiler für Fliessbettreaktoren, bestehend aus einem umgekehrten Konus mit einem inneren Teil (1) und einem äusseren Teil (2), wobei dieser Konus einen Scheitelwinkel von 50° bis 120° besitzt und seine Seitenwandungen mit in bezug auf die Konusachse symmetrisch angeordneten Gaszuführungskanälen (3) versehen sind, dadurch gekennzeichnet, dass die Gaszuführungskanäle (3) in bezug auf die Horizontale unter einem Winkel von 2° bis 50°, jedoch vorzugsweise von 10° bis 15° geneigt sind, und dass zwischen dem inneren Konus (1) und dem äusseren Konus (2) längs deren umfänglicher Berührungslinie Spalte (5) zum Einlass des rückgeführten Gases gebildet sind.

### Revendication

Distributeur de gaz pour réacteurs à lit fluidisé, comportant un cône inversé comprenant une partie intérieure (1) et une partie extérieure (2), ce cône présentant une conicité comprise entre 50° et 120°, et comportant sur ces parois latérales des passages (3) d'arrivée de gaz, disposés symétriquement par rapport à l'axe du cône, ce distributeur de gaz étant caractérisé en ce que les trous (3) d'amenée des gaz présentent, par rapport à l'horizontale, une inclinaison comprise entre 2° et 50°, mais comprise de préférence entre 10° et 15° et en ce que des fentes (5) d'amenée des gaz recyclés sont formées entre le cône intérieur (1) et le cône extérieur, le long de leur ligne de contact périphérique.

Fig. 1

Fig 2

FIG 3

Fig. 4